# EUROPEAN PATENT APPLICATION

(11) **EP 4 757 493 A1**
(43) Date of publication of application: **10.06.2026**
(21) Application number: 24217367.2
(22) Date of filing: 04.12.2024
(51) Int. Cl.: H05B 47/115, G01S 5/02, H05B 47/19

(54) **DEVICE FOR A LIGHTING SYSTEM AND METHOD FOR DETERMINING A STATE AND/OR A CHANGE OF A STATE OF AN ENVIRONMENT OF A LIGHTING SYSTEM**

(71) Applicant: Zumtobel Lighting GmbH, 6850 Dornbirn (AT)
(72) Inventor: Lorenz, Stefan, 6851 Dornbirn (AT); Steffens, Thomas, 6851 Dornbirn (AT); Heim, Andreas, 6851 Dornbirn (AT)
(74) Representative: Beder, Jens

(57) **Abstract**

The present invention provides a device for a lighting system. The device is configured to obtain information on two or more pulse-based radio communication (PBRC) signals that have a common source and have different run-times to each other, and determine a state and/or a change of a state of an environment of the lighting system by using the information on the two or more PBRC signals.

## Description

The present invention relates to a device for a lighting system, and to a method for determining a state and/or a change of a state of an environment of the lighting system. The device may be a light management device or a luminaire.

Lighting systems are provided in indoor areas, such as a building, in order to provide lighting. Often a lighting adapted to the state of an indoor area is desired. The same may apply for outdoor areas. For example, in case a lighting system comprises multiple luminaires that are installed in an indoor area, such as a room of a building, it may be desired to provide lighting depending on whether a person is present or not. In other words, it may be desirable to control the lighting of the lighting system in dependence on a change of state of the environment, the change of state being e.g. a change of occupation of the environment, such as a person being present or not. It may be also desirable to control the lighting depending on the spatial conditions of the environment, such as the ground, one or more walls, the ceiling etc. For example, a lighting in a narrow corridor is desired to be different compared to a lighting in a wide room. In addition, it may be desired that luminaires installed in a common type of sub-area of an indoor area, such as a corridor, room etc., are controlled together and/or in the same way.

Therefore, it is an object of the present invention to provide a device for a lighting system that allows determining a state and/or a change of a state of an environment of the lighting system.

These and other objects, which become apparent upon reading the following description, are solved by the subject matter of the independent claim. The dependent claims refer to preferred embodiments of the invention.

According to a first aspect of the present invention a device for a lighting system is provided. The device is configured to obtain information on two or more pulse-based radio communication (PBRC) signals that have a common source and have different run-times, and determine a state and/or a change of a state of an environment of the lighting system by using the information on the two or more PBRC signals.

Optionally, the device is configured to obtain run-time of one or more line of sight (LOS) PBRC signals. The device is configured to determine the state and/or the change of the state of the environment of the lighting system by using the obtained run-time of the one or more LOS PBRC signals, and at least one of: one or more PBRC signals having a common source as the one or more LOS PBRC signals and having been diffracted by at least one obstacle and/or travelled through at least one obstacle in the environment, and one or more PBRC signals having the common source as the one or more LOS PBRC signals and having been reflected one or more times in the environment.

In other words, the present invention proposes to use pulse-based radio communication (PBRC), such as ultra wideband communication, for gathering information on the environment of the lighting system. Optionally, the present invention proposes to use for this, in addition to line of sight (LOS) signals of the PBRC, at least one of: PBRC signals having a common source as the LOS signals and having been diffracted by at least one obstacle and/or travelled through at least one obstacle in the environment and PBRC signals having the common source as the LOS signals and having been reflected one or more times in the environment.

PBRC is a technology for transmitting and receiving short temporary packages of electromagnetic waves (e.g. for a wireless communication). Such a short temporary package of electromagnetic waves in the radio frequency range may be referred to as a pulse of the PBRC. In PBRC a signal or symbol may comprise multiple pulses. Information may be coded on the pulses. The PBRC signals may be ultra wideband signals (UWB signals).

Herein, the term "LOS signal" may be used for abbreviating the term "LOS PBRC signal". A LOS signal is a signal that travels a LOS path. A LOS path may be understood as a direct unblocked path between a transmitter and receiver, i.e. an unobstructed, shortest free air path between the transmitter and receiver. A LOS signal wirelessly communicated between the transmitter and receiver may have the shortest time of transmission (i.e. run-time) and the smallest attenuation of signal strength among signals being received by the receiver due to a PBRC transmission by the transmitter.

The one or more PBRC signals having a common source as the one or more LOS PBRC signals and having been diffracted by at least one obstacle and/or travelled through at least one obstacle in the environment may have been attenuated and/or delayed in the environment (e.g. due to traveling through one or more materials that attenuate and/or delay the PBRC signal, i.e. the PBRC signals having been retarded and/or diminished by material(s) in the path). These one or more PBRC signals may be referred to as "non-line of sight signals (NLOS signals)". A NLOS signal is a signal that travels a NLOS path. A NLOS path may be understood as path comprising an obstacle through which transmission occurs or at which diffraction occurs. The time of transmission (i.e. run-time) of a NLOS signal is greater than of a LOS signal transmitted by the same transmitter and received by the same receiver. The time of transmission may depend on the material of the obstacle and/or how the signal is diffracted at the obstacle. A velocity of the signal may depend on the material through which the signal travels. The attenuation of the signal strength may depend on a material of the obstacle.

The one or more PBRC signals having a common source as the one or more LOS PBRC signals and having been reflected one or more times in the environment may have been reflected at one or more spatial conditions (e.g. the ground, one or more walls, the ceiling etc.) of the environments and/or at one or more objects (e.g. person(s), furniture(s), etc.) being present in the environments. These PBRC signals may be referred to as "multiple path signals (MP signals)". A MP signal is a signal that travels a MP path. A MP path may be understood as an unblocked path with at least one unintended reflection between a transmitter and receiver. A reflection during a passive run-time measurement using a LOS PBRC signal is an intended reflection and does not represent an unintended reflection. The time of transmission (i.e. run-time) of a NLOS signals is greater than of a LOS signal transmitted by the same transmitter and received by the same receiver. The time of transmission may depend on the number of reflections and/or the direction of reflection. The attenuation of the signal strength may depend on the number of reflections and/or a material of a respective entity at which the reflection occurs.

The NLOS signals and MP signals provide additional information on the environment in addition to the information provided by the LOS signals on the environment. Using information on two or more PBRC signals, which have a common source and have different run-times relative to each other, for determining the state and/or the change of the state of the environment provides additional information compared to using a single PBRC signal for such determination. The two or more PBRC signals may be at least one of: one or more LOS signals, one or more NLOS signals and one or more MP signals.

Especially, the lighting system may comprise one or more luminaires that are configured for PBRC and, thus, transmit PBRC signals to generate (e.g. as the two or more PBRC signals) LOS signal(s), NLOS signal(s) and/or MP signal(s). Optionally, the one or more luminaires may be configured to transmit PBRC signals to generate (e.g. as the two or more PBRC signals) one or more LOS signals and additionally one or more NLS signals and/or one or more MP signals. The type of PBRC signals being generated depends on the environment (i.e. environmental setting) of the lighting system and, thus, on the different paths that the transmitted PBRC signals travel until being received by a respective receiver. Transmitting a PBRC signals that travels a LOS path may be referred to as transmitting a LOS signal. Accordingly, transmitting a PBRC signal that travels a NLOS path (e.g. has been diffracted by at least one obstacle and/or travelled through one obstacle in the environment) may be referred to as transmitting a NLOS signal. Transmitting a PBRC signals that travels a MP path (e.g. has been reflected one or more times in the environment) may be referred to as transmitting a MP signal. Especially, a PBRCsignal of an initial PBRC signal transmission by a luminaire that travels a LOS path is a LOS signal, that travels a NLOS path is a NLOS signal and that travels a MP path is a MP path. The device may be configured to obtain information on the two or more PBRC signals (e.g. LOS signal(s), NLOS signal(s) and/or MP signal(s)) for determining the state and/or the change of the state of the environment of the lighting system.

Optionally, the device is configured to obtain as the information on the two or more PBRC signals the run-time of one or more, optionally of each, of the two or more PBRC signals, and/or a signal strength of one or more, optionally of each, of the two or more PBRC signals.

The term "signal amplitude" may be used as synonym for the term "signal strength". The signal strength may be the received signal strength (i.e. the signal strength of a respective signal at a receiver receiving the signal). The received signal strength may be represented or indicated by the received signal strength indicator (RSSI).

The signal strength of a LOS signal is greater than the signal strength of PBRC signals having the common source as the LOS signal and having been diffracted by at least one obstacle, travelled through one obstacle in the environment or reflected one or more times in the environment. That is, the signal strength of a LOS signal at a receiver is greater than the signal strength of a NLOS signal of the same source at the same receiver. The signal strength of a LOS signal at a receiver is greater than the signal strength of a MP signal of the same source at the same receiver. The run-time of a LOS signal is shorter than the run-time of PBRC signals having the common source as the LOS signal and having been diffracted by at least one obstacle, travelled through one obstacle in the environment or reflected one or more times in the environment. That is, the run-time of a LOS signal at a receiver is shorter than the run-time of a NLOS signal of the same source at the same receiver. The run-time of a LOS signal at a receiver is shorter than the run-time of a MP signal of the same source at the same receiver.

The device may be configured to determine the state and/or change of the state of the environment by using environmental information comprising at least one of: information on a position of a luminaire being the common source of the two or more PRBC signals, information on a position of a second luminaire having received the two or more PRBC signals, information on a position of a third luminaire having transmitted the two or more PRBC signals or two or more further PRBC signals logically associated with the two or more LOS PRBC signals in response to receiving the two or more LOS PRBC signals, and information on a configuration of the environment.

In the description of the above optional feature the terms "first", "second" and "third" are used for distinguishing the luminaires from each other.

The information on the configuration of the environment may comprise or be at least one of: spatial conditions of the environment, such as the ground, one or more walls, the ceiling etc., information on one or more objects (e.g. person(s), furniture(s) etc.) being present in the environment and information on the lighting system, such as an installation location of luminaire(s), grouping of luminaire(s) etc.

The device may configured to determine, based on at least one of the signal strength of the two or more PBRC signals, the run-time of the two or more PBRC signals and the environmental information, whether a PBRC signal of the two or more PBRC signals has been travelling on a line of sight path, LOS path between the common source and a respective position in the environment, or has been reflected one or more times in the environment when travelling between the common source and the respective position in the environment, or has been diffracted by at least one obstacle and/or travelled through one obstacle in the environment when travelling between the common source and the respective position.

The device may be configured to distinguish, based on signal strength and/or run-time, LOS PBRC signal(s) from PBRC signal(s) having the common source as the LOS PBRC signal(s) and having been diffracted by at least one obstacle, travelled through one obstacle in the environment in the environment, and from PBRC signal(s) having the common source as the LOS PBRC signal(s) and having been reflected one or more times in the environment.

Optionally, the device is a light management device configured to wirelessly communicate with one or more luminaires of the lighting system. Alternatively, the device is a luminaire configured to transmit and receive PBRC signals.

In case the device is a light management device, the device may be configured to obtain information on the two or more PBRC signals (e.g. LOS signal(s), NLOS signal(s) and/or MP signal(s)) by receiving this information from one or more luminaires of the lighting system. In case the device is a luminaire, the device may be a member (in the form of a luminaire) of the lighting system. In this case, the device may be configured to obtain the information on the two or more PBRC signals (e.g. LOS signal(s), NLOS signal(s) and/or MP signal(s)), either by performing PBRC (e.g. being a source of such signals and/or receiver of such signals transmitted by another entity (e.g. luminaire) of the lighting system) or by receiving this information from one or more luminaires of the lighting system.

The light management device may comprise at least one of a controller, a microcontroller, a processor, a microprocessor, an application specific integrated circuit (ASIC), a field programmable gate array (FPGA) etc.

The device being the light management device for the lighting system or a luminaire for the lighting system allows using the PBRC for two purposes. On one side the PBRC may be used in the lighting system for wireless communication. On the other side, the PBRC may be used for gathering information on the environment, e.g. determining a state and/or change of a state of the environment. This is advantageous as the resources for the wireless communication may be also used for gathering the information on the environment and, thus, no additional sensors are needed for this. This reduces complexity and costs of providing the lighting system.

The device being the luminaire may be configured to transmit and receive the two or more PBRC signals. In addition or alternatively, the device may be configured to receive the two or more PBRC signals from one or more luminaires.

In case the device being the luminaire may be configured to transmit and receive the two or more PBRC signals, the device is configured to perform a passive run-time measurement using the PBRC. That is, the device may be configured to transmit PBRC signals to an entity, such as a reflector or luminaire; wherein the LOS PBRC signals are reflected at the entity back to the luminaire and, thus, the luminaire is configured to receive the PBRC signals having been reflected back. For transmitting the PBRC signals to a respective position in the environment, e.g. to a reflector or luminaire, the device may be configured to transmit PBRC signals such that the PBRC transmission is focused or stronger in a direction of the reflector or luminaire. This may be true in any example of the present disclosure, in which PBRC signal(s) are transmitted to an entity, such as a reflector or luminaire. The reflection at the entity may be referred to an intended reflection and is different to an unintended reflection of a MP signal. In this case the transmitter and receiver, being the device, are at the same position. The overall run-time from the device to the entity and from the entity back to the device via the LOS path between the device and the entity allows determining a distance between the device and the entity. The device may be configured to determine the distance between the device and the entity by determining (e.g. computing) and using the aforementioned overall run-time for the determination of the distance. Different signal paths compared to the LOS signal path generate NLOS signals and/or MP signals that have a common source with the LOS signals, being the device. The device may be configured to receive the NLOS signals and/or MP signals.

In addition or alternatively, the device being the luminaire configured to transmit and receive the two or more PBRC signals may be configured to perform (e.g. be part of) an active run-time measurement using the PBRC. For example, the device may be configured to transmit a PRBC signal or a further PRBC signal (second PRBC signal) logically associated with the PRBC signal in response to receiving the LOS PRBC signal from another luminaire that performs and initiated the active run-time measurement. The overall time comprising a run-time of the PRBC signal via the LOS path from the other luminaire to the device, the response time starting with receival of the PRBC signal by the device and ending with the transmission of the PRBC signal or the further PRBC signal (second PRBC signal) logically associated with the PRBC signal by the device via the LOS path back to the other luminaire, and a second run-time of the aforementioned signal transmitted by the device to the other luminaire via the LOS path allows determining a distance between the other luminaire and the device. The other luminaire may know the response time. The other luminaire may be configured to determine the distance between the other luminaire and the device by determining (e.g. computing) the aforementioned overall time and using the aforementioned overall time for the determination of the distance. Different signal paths compared to the LOS signal path generate NLOS signals and/or MP signals that have a common source with the LOS signals, being the device. The device may be configured to receive the NLOS signals and/or MP signals and transmit respective signals back to the other luminaire.

In addition or alternatively, the device being the luminaire configured to transmit and receive the two or more LOS PBRC signals may be configured to perform (e.g. be part of) an active run-time measurement using the PBRC. For example, the device may be configured to receive a LOS PRBC signal from another luminaire that performs and initiated the active run-time measurement. The run-time between a transmission point in time of the LOS PRBC signal at the other luminaire and a receival point in time of the LOS PRBC signal at the device allows determining a distance between the other luminaire and the device. For this, the device may be configured to compare the transmission point in time and the receival point in time with each other. The transmission point in time may be information carried by the LOS PRBC signal, that is the PBRC signal having travelled the LOS path from the other luminaire to the device. The device and the other luminaire may be configured to synchronize their clocks for time measurement. The device may be configured to determine the distance between the other luminaire and the device by determining (e.g. computing) the aforementioned run-time and using the aforementioned run-time for the determination of the distance. Different signal paths compared to the LOS signal path generate NLOS signals and/or MP signals that have a common source with the LOS signals, being the other luminaire. The device may be configured to receive the NLOS signals and/or MP signals. For the aforementioned example of active run-time measurement, the device may be a device configured to receive the two or more PBRC signals from one or more luminaires.

Optionally, the device is configured to determine a distance between two luminaires by obtaining the run-time of a LOS PBRC signal having been transmitted by a first luminaire of the two luminaires and received by a second luminaire of the two luminaires. The device may be configured to obtain a run-time of a PBRC signal having been transmitted by the first luminaire, reflected at ground and received by the second luminaire. The device may be configured to determine, using the determined distance between the two luminaires and the obtained run-time, a height of the two luminaires over ground.

That is, the device may be configured to determine, as a state of the environment, the height of the two luminaires.

Optionally, the device may be the second luminaire. In this case, the device being the second luminaire may be configured to obtain the run-time of a signal, such as the LOS PBRC signal or the PBRC signal having been transmitted by the first luminaire and reflected at ground, by comparing a transmission point in time of the signal at the first luminaire and a receival point in time of the signal at the second luminaire. The transmission point in time of the signal may be carried by the signal as information.

Optionally, the device may be the first luminaire. In this case, the device being the first luminaire may be configured to obtain (e.g. receive) the run-time of a signal, such as the LOS PBRC signal or the PBRC signal having been transmitted by the first luminaire and reflected at ground, from the second luminaire. In addition or alternatively, the device being the first luminaire may be configured to obtain (e.g. receive) a receival point in time of the signal at the second luminaire (e.g. from the second luminaire) and obtain the run-time of the signal by comparing the transmission point in time of the signal at the first luminaire and the receival point in time of the signal at the second luminaire.

Optionally, the device may be a light management device. In this case the device being light management device may be configured to obtain (e.g. receive) the run-time of a signal, such as the LOS PBRC signal or the PBRC signal having been transmitted by the first luminaire and reflected at ground, from the first luminaire and/or second luminaire. In addition or alternatively, the device being the light management device may be configured to obtain (e.g. receive) a receival point in time of the signal at the second luminaire (e.g. from the second luminaire), a transmission point in time of the signal at the first luminaire (e.g. from the first luminaire) and obtain the run-time of the signal by comparing the transmission point in time of the signal at the first luminaire and the receival point in time of the signal at the second luminaire.

Optionally, the first and second luminaire may be configured to transmit and receive PBRC signals.

Optionally, the device is configured to determine a second distance between the two luminaires by obtaining the run-time of a LOS PBRC signal having been transmitted by the second luminaire of the two luminaires and received by the first luminaire of the two luminaires. The device may be configured to obtain a second run-time of a PBRC signal having been transmitted by the second luminaire, reflected at ground and received by the first luminaire. The device may be configured to determine, using the determined second distance between the two luminaires and the obtained second run-time, a second height of the two luminaires over ground. The device may be configured to verify the determined height of the two luminaires over ground by comparing the determined height of the two luminaires over ground and the determined second height of the two luminaires over ground with each other.

In the aforementioned passage, the term "second" in the terms "second distance" and "second height" are used to distinguish the distance and height determined based on signals transmitted from the second luminaire to the first luminaire from the distance and height determined based on signals transmitted from the first luminaire to the second luminaire. That is, the term "second" should not be understood that a different distance or height is to be determined.

The device optionally being the second luminaire may be configured to obtain (e.g. receive) the run-time of a signal, such as the LOS PBRC signal or the PBRC signal having been transmitted by the second luminaire and reflected at ground, from the first luminaire. In addition or alternatively, the device being the second luminaire may be configured to obtain (e.g. receive) a receival point in time of the signal at the first luminaire (e.g. from the first luminaire) and obtain the run-time of the signal by comparing the transmission point in time of the signal at the second luminaire and the receival point in time of the signal at the first luminaire.

The device optionally being the first luminaire may be configured to obtain the run-time of a signal, such as the LOS PBRC signal or the PBRC signal having been transmitted by the second luminaire and reflected at ground, by comparing a transmission point in time of the signal at the second luminaire and a receival point in time of the signal at the first luminaire. The transmission point in time of the signal may be carried on the signal as information.

The device optionally being the light management device may be configured to obtain (e.g. receive) the run-time of a signal, such as the LOS PBRC signal or the PBRC signal having been transmitted by the second luminaire and reflected at ground, from the first luminaire and/or second luminaire. In addition or alternatively, the device being the light management device may be configured to obtain (e.g. receive) a receival point in time of the signal at the first luminaire (e.g. from the first luminaire), a transmission point in time of the signal at the second luminaire (e.g. from the second luminaire) and obtain the run-time of the signal by comparing the transmission point in time of the signal at the second luminaire and the receival point in time of the signal at the first luminaire.

Optionally, the device is configured to obtain a received signal strength and/or a run-time of a PBRC signal having been transmitted by a first luminaire of two luminaires, reflected at ground and received by a second luminaire of the two luminaires, and determine a reflectivity of the ground using a distance between the two luminaires, a height over ground of the two luminaires and the obtained received signal strength and/or run-time of the PBRC signal.

That is, the device may be configured to determine, as a state of the environment, the reflectivity of the ground. The distance and height may be determined as outlined before. The first luminaire and second luminaire may be the first luminaire and second luminaire described before with regard to determining the height.

The device may be the second luminaire, the first luminaire or a light management device. The device being the second luminaire may be configured to obtain the received signal strength of the PBRC signal (having been transmitted by the first luminaire and reflected at ground) by measuring the signal strength of the PBRC signal. The device being the first luminaire may be configured to obtain (e.g. receive) from the second luminaire the received signal strength of the PBRC signal received by the second luminaire. The device being the light management device may be configured to obtain (e.g. receive) from the second luminaire the received signal strength of the PBRC signal received by the second luminaire.

Optionally, the device is configured to determine a change of the state of the environment by determining a change over time of the received signal strength and/or run-time of the PBRC signal.

For example, a change of the state of the environment may be caused by a person or an object, such as a table, chair etc., being present at the position of the ground, at which the PBRC signal having been transmitted by the first luminaire is reflected. The person or the object may have a different reflectivity compared to the ground. Optionally, a change of the state of the environment may be a change of the reflectivity of the ground. For example, a blank ground may have a different reflectivity compared to a ground with a layer of another material and/or substance, such as a carpet, leaves, water etc., being present on the ground.

Optionally, the device is configured to obtain a signal strength of a LOS PBRC signal having been transmitted by a luminaire, reflected at a reflector and received again by the luminaire, the luminaire and reflector being installed at the height of a person over ground. The device may be configured to obtain a signal strength of a PBRC signal having been transmitted by the luminaire, reflected or diffracted at an entity having a height greater than the person over ground, reflected at the reflector and received again by the luminaire. The device may be configured to determine that the person is present in case the obtained signal strength of the LOS PBRC signal is zero while the obtained signal strength of the PBRC signal having been reflected or diffracted is (still) greater than zero.

That is, the device may be configured to determine the presence of the person as a state of the environment. In the aforementioned optional feature it is assumed that the person appears in the LOS path. That is, when the person is present the LOS path is blocked and, thus, the obtained signal strength of the LOS PBRC signal is zero. Alternatively or additionally, the person may appear in the path through which the PBRC signal being reflected or diffracted travels. The device may be configured to determined that the person is present in case the LOS PBRC signal is present while the obtained signal strength of the PBRC signal having been reflected or diffracted reduces below a threshold for the signal strength. Optionally, the entity may be installed at the height of the person over ground.

The device may be the luminaire or a light management device. In case the device is the light management device, the device may be configured to obtain (e.g. receive) from the luminaire the signal strength of the LOS PBRC signal and the signal strength of the PBRC signal reflected or diffracted at the entity having a height greater than the person over ground. The entity may be for example a ceiling.

Optionally, the device is configured to obtain a signal strength of a LOS PBRC signal transmitted by a first luminaire of two luminaires and received by a second luminaire of the two luminaires, the two luminaires being installed at the height of a person over ground. The device may be configured to obtain a signal strength of a PBRC signal having been transmitted by the first luminaire, reflected or diffracted at an entity having a height greater than the person over ground, and received by the second luminaire. The device may be configured to determine that the person is present in case the obtained signal strength of the LOS PBRC signal is zero while the obtained signal strength of the PBRC signal having been reflected or diffracted is (still )greater than zero.

That is, the device may be configured to determine the presence of the person between the two luminaires as a state of the environment. The entity may be a ceiling for example.

Optionally, the device may be the second luminaire. In this case, the device being the second luminaire may be configured to obtain the signal strength of a signal, such as the LOS PBRC signal or the PBRC signal having been reflected or diffracted at the entity having a height greater than the person over ground, by measuring the signal strength of the signal (that is received by the second luminaire).

Optionally, the device may be the first luminaire. In this case, the device being the first luminaire may be configured to obtain (e.g. receive) from the second luminaire the signal strength of the signal, such as the LOS PBRC signal or the PBRC signal having been reflected or diffracted at the entity having a height greater than the person over ground.

Optionally, the device may be a light management device. In this case, the device being the light management device may be configured to obtain (e.g. receive) from the second luminaire the signal strength of the signal, such as the LOS PBRC signal or the PBRC signal having been reflected or diffracted at the entity having a height greater than the person over ground.

Optionally, the device is configured to, in case multiple luminaires are arranged in a staircase such that each luminaire has LOS with at least one other luminaire, obtain information on one or more LOS PBRC signals having been received by the multiple luminaires and information on one or more PBRC signals having a common source as the one or more LOS PBRC signals, having been diffracted in the environment and received by one or more of the multiple luminaires. The device may be configured to determine a location of the multiple luminaires in the staircase using the obtained information on the one or more LOS PBRC signals and obtained information on the one or more PBRC signals having been diffracted in the environment.

That is, the device may be configured to determine a location of one or more of the multiple luminaires in the staircase as a state of the environment. The device may be a luminaire of the multiple luminaires or a light management device. The device being a luminaire of the multiple luminaires may obtain information on signals received by other luminaires by obtaining (e.g. receiving) the information from the other luminaires. The device being the luminaire may obtain information on signals received by itself by processing the received signals. The device being a light management device may be configured to obtain information on signals received by the luminaires by obtaining (e.g. receiving) the information from the luminaires.

Optionally, the device is configured to, in case multiple luminaires are arranged in an indoor area, obtain information on LOS PBRC signals communicated by the multiple luminaires, determine distances between the multiple luminaires using the information on the LOS PBRC signals and/or the environmental information, e.g. information on an installation of the multiple luminaires in the environment, determine, based on the determined distances, a pattern of two or more luminaires of the multiple luminaires, and assign the two or more luminaires of the determined pattern to a common group or a sub-area of the indoor area and/or identify the determined pattern with a pattern of a given choice.

That is, the device may be configured to determine the pattern of two or more luminaires as a state of the environment. The device may be a luminaire of the multiple luminaires or a light management device. The determination of the distance using the information on the LOS PBRC signals may be performed as outlined already above.

The information on the installation of the multiple luminaires in the environment may be or comprise a floor plan. Determining the distances between the multiple luminaires using the information on the LOS PBRC signals may be computing or estimating the distances between the multiple luminaires using the information on the LOS PBRC signals. The pattern of a given choice may be a floorplan. For example, identifying the determined pattern with a pattern of a given choice may be identifying the determined pattern as a respective room in a floorplan.

Optionally, the device is configured to assign the two or more luminaires to a type of sub-area of different types of sub-areas, such as a room or corridor, of the indoor area depending on the determined distances between the two or more luminaires. Optionally, the device is configured to obtain information on PBRC signals having a common source as the LOS PBRC signals, having been reflected one or more times in the environment and received by the two or more luminaires and determine one or more dimensions, such as width or height, of the sub-area using information on the assigned type of sub-area and the obtained information on the PBRC signals having been reflected in the environment.

That is, the device may be configured to determine an association of two or more luminaires to a type of sub-area as a state of the environment and/or one or more dimensions of the sub-area as a state of the environment.

Optionally, the device is, in case multiple luminaires are arranged in an indoor area, configured to obtain information on signal strength of PBRC signals communicated between the multiple luminaires, and determine that two luminaires of the multiple luminaires are separated by a wall in case the PBRC signals communicated between the two luminaires have a reduced signal strength compared to a signal strength of PBRC signals communicated between luminaires having a distance between them that equals or is within a range of the distance between the two luminaires.

That is, the device may be configured to determine the presence of a wall between two or more luminaires as a state of the environment. The signal strength of a PBRC signal travelling from one luminaire through a wall to another luminaire is less compared to the signal strength of a PBRC signal strength travelling from the luminaire to the other luminaire without the wall being present between the two luminaires. The wall has an attenuating effect on the PBRC signal. The PBRC signal traveling through the wall is a NLOS signal and the PBRC signal traveling between the two luminaires without the wall may be a LOS signal.

Optionally, the device is configured to determine that a door is present in the determined wall between the two luminaires in case the reduced signal strength changes over time between two different signal strength values.

That is, the device may be configured to determine the presence of a door in the wall between two or more luminaires as a state of the environment. Namely, in case the door is opening the PBRC signal travels through the open door and, thus, is not attenuated by the door. As a result, the signal strength of the PBRC is greater in case the door is opened compared to a point in time when the door is closed. Thus, the device may be configured to determine opening or closing of the door as a change of state of the environment.

Optionally, the device is configured to, in case a luminaire is arranged over an entity, such as a table, in an indoor area, obtain information on a LOS PBRC signal transmitted by the luminaire, reflected at a ceiling and received by the luminaire, information on a second LOS PBRC signal transmitted by the luminaire, reflected at the entity and received by the luminaire, and information on a PBRC signal having been transmitted by the luminaire, diffracted at the entity, reflected at ground and received by the luminaire. The device may be configured to determine that the LOS PBRC signal having the greater received signal strength of the two LOS PBRC signals is reflected at the ceiling, and/or the LOS PBRC signal having a changing received signal strength of the two LOS PBRC signals is reflected at the entity.

In the aforementioned case, it may be assumed that the luminaire is arranged closer to the ceiling compared to the entity. The entity may be for example an object, such as a table, chair etc.

Optionally, the device is configured to obtain information on a new PBRC signal communicated by a luminaire, determine whether the communicated PBRC signal is a LOS PBRC signal or not, and control the luminaire differently in case the communicated PBRC signal is not a LOS PBRC signal compared to a case, in which the communicated PBRC signal is a LOS PBRC signal.

This allows detecting presence of a new object, e.g. obstacle, being present as a state of the environment.

Optionally, the device is configured to control lighting of the lighting system based on the determine state and/or change of the state of the environment of the lighting system.

Controlling lighting of the lighting system may comprise controlling which luminaire(s) of the lighting system emit light at a point in time and/or characteristics of the light emission, such as light intensity, light color, light emission pattern (e.g. blinking with different frequencies), angle of radiation of the light sources etc.

Herein, luminaire(s) may comprise one or more light emission diodes (LEDs) as a light source. This is not limiting and, thus, the luminaire(s) may comprise additionally or alternatively at least one other type of light source.

In order to achieve the device according to the present invention, some or all of the above described optional features may be combined with each other.

According to a second aspect of the invention, a method for determining a state and/or a change of a state of an environment of a lighting system is provided. The method comprises obtaining information on two or more pulse-based radio communication (PBRC) signals that have a common source and have different run-times to each other. The method comprises determining the state and/or the change of a state of the environment of the lighting system by using the information on the two or more PBRC signals. Optionally, the method comprises obtaining a run-time of one or more line of sight (LOS) PBRC signals and determining the state and/or the change of a state of the environment of the lighting system by using the obtained run-time of the one or more LOS PBRC signals, and at least one of one or more PBRC signals having a common source as the one or more LOS PBRC signals and having been diffracted by at least one obstacle and/or travelled through at least one obstacle in the environment, and one or more PBRC signals having the common source as the one or more LOS PBRC signals and having been reflected one or more times in the environment.

The above description with regard to the device according to the first aspect of the present invention is also valid for the method according to the second aspect of the present invention.

The method according to the second aspect achieves the same advantages as the device according to the first aspect.

The present invention is not limited to indoor areas and may be also used in outdoor areas, i.e. for providing lighting in an outdoor area. The description herein is correspondingly valid for outdoor areas. That is, the description herein is valid for indoor areas as well as outdoor areas.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed figures (FIGs.), in which
- **FIG. 1**: shows an example of a device according to an embodiment of the present invention,
- **FIG. 2 to 11**: each show a schematic side view of an example of a lighting system and an example of a scenario in which the device of FIG. 1 may be used for determining a state and/or a change of a state of an environment of the lighting system, and
- **FIG. 12**: shows an example of received multiple PBRC signals that have been transmitted by a common transmitter (i.e. they have a common source) and received by a respective receiver, wherein the received multiple PBRC signals have different run-times.

In the FIGs., corresponding elements have the same reference signs. The size of elements in the FIGs. is not to scale and may be different compared to a real life implementation in order to highlight details of the embodiments.

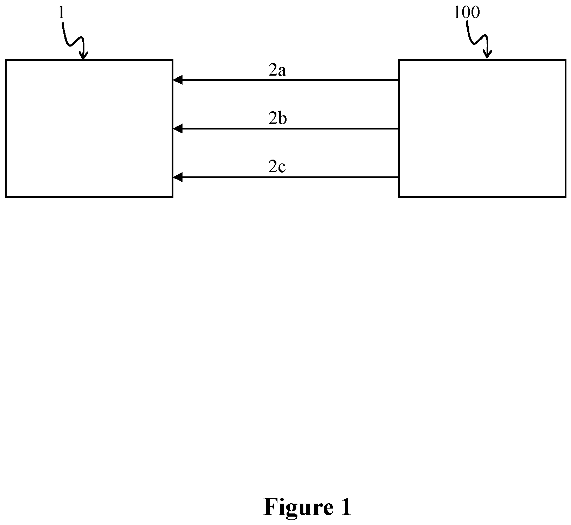

**FIG. 1** shows an example of a device according to an embodiment of the present invention. The device of FIG. 1 is an example of the device according to the first aspect of the invention described above. Thus, the description of the device according to the first aspect of the invention is correspondingly valid for the device of FIG. 1.

The device 1 of FIG. 1 is a device for a lighting system 100. The device 1 is configured to obtain information on two or more pulse-based radio communication (PBRC) signals 2a, 2b, 2c that have a common source and have different run-times, and determine a state and/or a change of a state of an environment of the lighting system 100 by using the information on the two or more PBRC signals 2a, 2b, 2c. The two or more PBRC signals may be at least one of: one or more line of sight (LOS) PBRC signals, one or more NLOS PBRC signals and one or more MP PBRC signals.

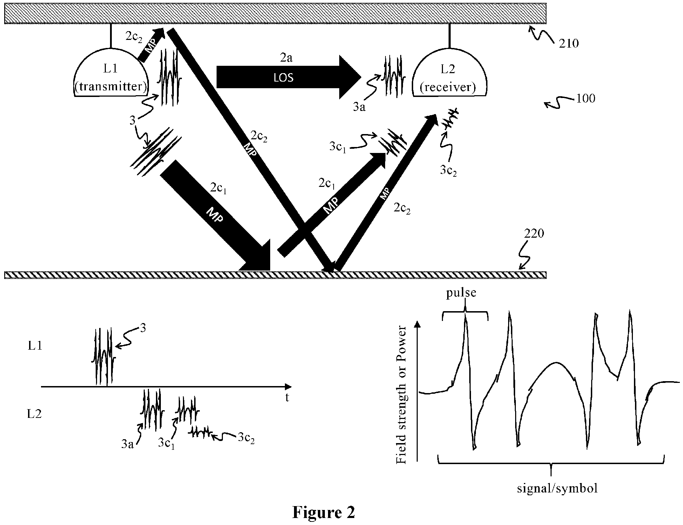

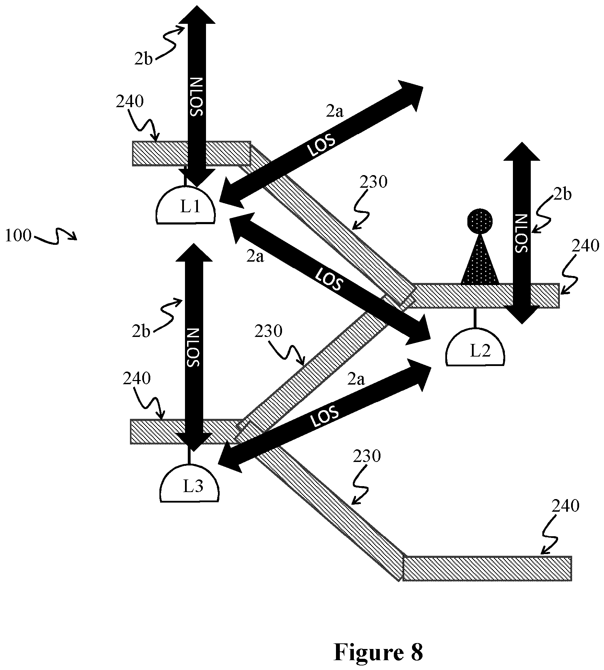

The device 1 may be configured to obtain a run-time of one or more line of sight (LOS) pulse-based radio communication (PBRC) signals 2a. Herein, especially in the following, the LOS PBRC signals may be abbreviated as "LOS signals". Examples of LOS signals 2a are shown in FIGs. 2 to 10. The device 1 is configured to determine a state and/or a change of a state of an environment of the lighting system 100 by using the obtained run-time of the one or more LOS PBRC signals 2a, and at least one of one or more PBRC signals 2b having a common source as the one or more LOS PBRC signals 2a and having been diffracted by at least one obstacle and/or travelled through one obstacle in the environment, and one or more PBRC signals 2c having the common source as the one or more LOS PBRC signals and having been reflected one or more times in the environment. The aforementioned obtained run-time comprises a previously obtained run-time of a previous measurement(s) and/or previous determination(s). Herein, especially in the following, PBRC signals having the common source as LOS signals and having been diffracted by at least one obstacle and/or travelled through one obstacle in the environment are also called "NLOS signals". Examples of NLOS signals 2b are shown in FIGs. 8, 9 and 10. Herein, especially in the following, PBRC signals having the common source as LOS signals and having been reflected one or more times in the environment are also called "MP signals". Examples of MP signals are shown in FIGs. 2, 5, 6, 7, 9 and 11.

**FIG. 2** shows an example of two luminaires L1 and L2 being installed at a ceiling 210 of an indoor area (e.g. room), wherein the first luminaire L1 performs a PBRC transmission that is received by the second luminaire L2. Thus, the first luminaire L1 represents a transmitter and the second luminaire L2 represents a receiver of the PBRC communication. In FIG. 2, the signal strength 3 of the initial PBRC signal at the first luminaire L1 at the point in time of transmission is shown. As shown at the bottom right, a PBRC signal may comprise multiple pulses. The signal strength of the signal may corresponds to the amplitudes of the pulses that is the smaller the signal strength the smaller the amplitudes and vice versa.

As shown in FIG. 2, the initial PBRC signal may travel a LOS path to the second luminaire L2. That is, a signal 2a is transmitted via LOS path from the first luminaire L1 to the second luminaire L2 (i.e. the signal 2a may be referred to as LOS signal). Additionally, the initial PBRC signal 3 may travel several MP paths, wherein two examples of possible MP paths are shown in FIG. 2. Thus, a first MP signal 2c₁ is transmitted by the first luminaire L1, reflected at the ground 220 and then received by the second luminaire L2. A second MP signal 2c₂ is transmitted by the first luminaire L1, reflected at first at the ceiling 210, then reflected at the ground 220 and afterwards received by the second luminaire L2. At the bottom left of FIG. 2, the signal strength 3 of the initial signal at the luminaire L1, the signal strength 3a of the received LOS signal 2a at the luminaire L2, the signal strength 3c₁ of the received first MP signal 2c₁ at the luminaire L2 and the signal strength 3c₂ of the received second MP signal 2c₂ at the luminaire L2 are shown, wherein t represents the time. That is, the LOS signal 2a is received first as it travels a direct unblocked path (i.e. LOS path) from the luminaire L1 to the luminaire L2. The first MP signal 2c₁ is received before the second MP signal 2c₂ as its MP path is shorter compared to the MP path of the second MP signal 2c₂ due to the less reflections. Herein, a transmission of PBRC signals may be non-directional or only weakly directional.

An attenuation of signal strength of the PBRC signal traveling via the LOS path (i.e. attenuation of the LOS signal) may depend on a quality of the LOS path and a length of the LOS path. The run-time may depend on the length of the LOS path. It may be assumed that a signal velocity is maximal in the LOS path.

In the example of FIG. 2, the second luminaire L2 may perform an active run-time measurement, as described above. The device 1 may be the second luminaire L2. Alternatively, the device 1 may be the first luminaire L1 or a light management device (not shown in FIG. 2) for managing light emission of the lighting system 100. As shown in FIG. 2, the luminaires L1 and L2 may be part of the lighting system 100.

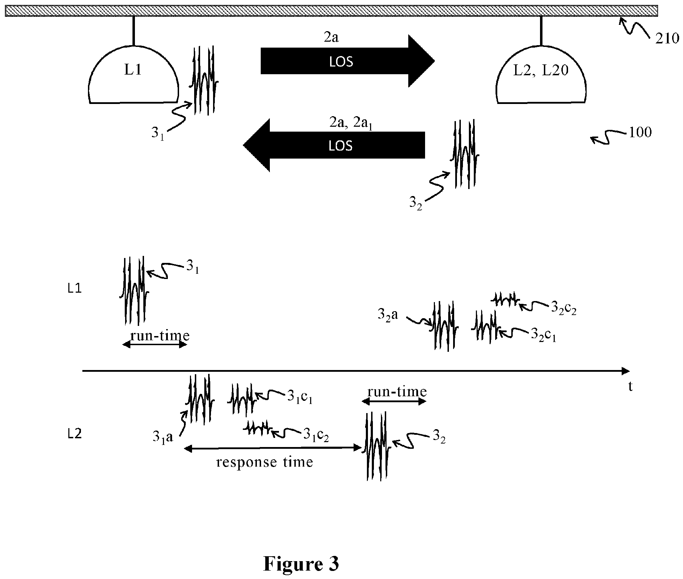

According to the example of **FIG. 3**, the first luminaire L1 and second luminaire L2 transmit and receive PBRC signals so that the first luminaire L1 may perform an active run-time measurement. An advantage of the active run-time measurement of FIG. 3 is that there is no need of synchronizing the clocks (i.e. time measurement) of the luminaires L1 and L2 with each other. In FIG. 3, the signal strength 3₁ of the initial PBRC signal at the first luminaire L1 at the point in time of transmission is shown. The initial PBRC signal may travel a LOS path to the second luminaire L2. That is, a LOS signal 2a is transmitted from the first luminaire L1 to the second luminaire L2. Additionally, the initial PBRC signal 3 may travel several MP paths, which are not shown in FIG. 3 in the form of arrows. The same examples of MP signals 2c₁ and 2c₂, as shown in FIG. 2, may occur. As shown in FIG. 3 the second luminaire L2 may be configured to transmit the LOS signal 2a or a LOS signal 2a₁ logically associated with the LOS signal 2a in response to receiving the LOS signal 2a from the first luminaire L1 that performs and initiated the active run-time measurement. Due to the transmission of the aforementioned LOS signal 2a or 2a₁ respective MP signals may be received by the first luminaire L1. The luminaire L2 may be a responding device L20 that responses to the PBRC communication by the luminaire L1 to allow the active run-time measurement.

At the bottom of FIG. 3, the signal strength 3₁ of the initial signal at the luminaire L1, the signal strength 3₁a of the received LOS signal 2a at the luminaire L2, the signal strength 3₁c₁ of the received first MP signal 2c₁ at the luminaire L2 and the signal strength 3₁c₂ of the received second MP signal 2c₂ are shown, wherein t represents the time. In addition, the signal strength 3₂ of the LOS signal 2a or 2a₁ transmitted by the second luminaire L2 to the first luminaire in response to receiving the LOS signal 2a is shown. In addition, the signal strength 3₂a of the received LOS signal 2a or 2a₁ at the luminaire L1, the signal strength 3₂c₁ of the received first MP signal at the luminaire L1 and the signal strength 3₂c₂ of the received second MP signal at the luminaire L1 due to the transmission, by the luminaire L2, of the LOS signal 2a or 2a₁ are shown. At the bottom of FIG. 3, the run-time between a transmission point in time of the LOS signal 2a at the luminaire L1 and receival point in time of the LOS signal 2a at the luminaire L2 is shown. The response time between the point in time at which the luminaire L2 receives the LOS signal 2a and the point in time at which the luminaire L2 transmits the LOS signal 2a or 2a₁ is shown. The run-time between a transmission point in time of the LOS signal 2a or 2a₁ at the luminaire L2 and receival point in time of the LOS signal 2a or 2a₁ at the luminaire L1 is shown.

An overall time comprising a run-time of the LOS signal 2a from the luminaire L1 to the luminaire L2, a response time starting with receival of the LOS signal 2a by the luminaire L2 and ending with the transmission of the LOS signal 2a or a LOS signal 2a₁ logically associated with the LOS signal 2a by the luminaire L2 back to the luminaire L1, and a second run-time of the aforementioned signal 2a or 2a₁ transmitted by the luminaire L2 to the luminaire L1 allows determining a distance between the luminaires L1 and L2. The first luminaire L1 may know the response time. Optionally, the luminaire L2 may encode the response time on the LOS signal 2a or 2a₁ in order to provide the response time to the luminaire L1. The first luminaire L1 may be configured to determine the distance between the first luminaire L1 and the second luminaire L2 by determining (e.g. computing) the aforementioned overall time and using the aforementioned overall time for the determination of the distance.

The device 1 may be the first luminaire L1. Alternatively, the device 1 may be the second luminaire L2 or a light management device (not shown in FIG. 3) for managing light emission of the lighting system 100.

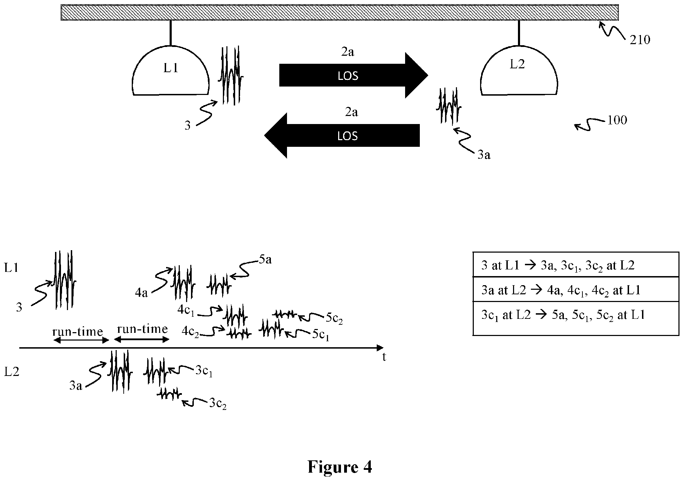

According to the example of **FIG. 4****,** the first luminaire L1 transmits PBRC signals and the second luminaire L2 acts as a reflector so that the first luminaire L1 may perform a passive run-time measurement. In FIG. 4, the signal strength 3 of the initial PBRC signal at the first luminaire L1 at the point in time of transmission is shown. The initial PBRC signal may travel a LOS path to the second luminaire L2. That is, a LOS signal 2a is transmitted from the first luminaire L1 to the second luminaire L2. Additionally, the initial PBRC signal 3 may travel several MP paths, which are not shown in FIG. 4 in the form of arrows. The same examples of MP signals 2c₁ and 2c₂, as shown in FIG. 2, may occur. As shown in FIG. 4 the second luminaire L2 may be configured to reflect the LOS signal 2a transmitted by the first luminaire L1 that performs and initiated the passive run-time measurement. The reflected LOS signal 2a has the signal strength 3a at the second luminaire L2. Due to the reflection of the LOS signal 2a at the second luminaire respective MP signals may be received by the first luminaire L1. Additionally, the first MP signal may be also reflected by the second luminaire L2 and respective MPs signals (due to the reflection of the first MP signal by the second luminaire L2) may be received by the first luminaire L1.

At the bottom left of FIG. 4, the signal strength 3 of the initial signal at the luminaire L1, the signal strength 3a of the received LOS signal 2a at the luminaire L2, the signal strength 3₁c₁ of the received first MP signal 2c₁ at the luminaire L2 and the signal strength 3₁c₂ of the received second MP signal 2c₂ at the luminaire L2 are shown, wherein t represents the time. In addition, the signal strength 4a of the LOS signal 2a (at luminaire L1) reflected by the second luminaire L2 to the first luminaire L1 is shown. In addition, the signal strength 4c₁ of a received first MP signal at the luminaire L1 and the signal strength 4c₂ of a received second MP signal at the luminaire L1 due to the reflection of the LOS signal 2a at the luminaire L2 are shown. Further, the signal strength 5a of the first MP signal 2c₁ (at luminaire L1) reflected by the second luminaire L2 to the first luminaire L1 is shown. In addition, the signal strength 5c₁ of a received first MP signal at the luminaire L1 and the signal strength 5c₂ of a received second MP signal at the luminaire L1 due to the reflection of the first MP signal 2c₁ at the luminaire L2 are show.

At the bottom right of FIG. 4 a table shows how the initial signal strength 3 of the initial PBRC signal at luminaire L1 results in a signal strength 3a of a part of the initial signal traveling the LOS path (i.e. of the LOS signal 2a) at the luminaire L2, a signal strength 3c₁ of a part of the initial signal traveling a first MP path (i.e. of the first MP signal 2c₁ as shown in FIG. 2), and a signal strength 3c₂ of a part of the initial signal traveling a second MP path (i.e. of the second MP signal 2c₂ as shown in FIG. 2). The signal strength 3a of the LOS signal 2a reflected at the luminaire L2 results in a signal strength 4a of a LOS signal 2a received by the first luminaire L1, signal strength 4c₁ of a first MP signal (taking the same MP path as the first MP signal 2c₁ of FIG. 2) received by the first luminaire L1, and a signal strength 4c₂ of a second MP signal (taking the same MP path as the second MP signal 2c₂ of FIG. 2) received by the first luminaire L1. The signal strength 3c₁ of the first MP signal 2c₁ reflected at the luminaire L2 results in a signal strength 5a of a LOS signal received by the first luminaire L1, signal strength 5c₁ of a first MP signal (taking the same MP path as the first MP signal 2c₁ of FIG. 2) received by the first luminaire L1, and a signal strength 5c₂ of a second MP signal (taking the same MP path as the second MP signal 2c₂ of FIG. 2) received by the first luminaire L1.

At the bottom of FIG. 4, the run-time between a transmission point in time of the LOS signal 2a at the luminaire L1 and receival point in time of the LOS signal 2a at the luminaire L2 is shown. The run-time between a point in time at which the LOS signal 2a is reflected at the luminaire L2 and receival point in time of the LOS signal 2a at the luminaire L1 is shown. The overall run-time of the LOS signal 2a being transmitted by the luminaire L2, reflected by the second luminaire L2 and received again by the luminaire L1 may be used for determining a distance between the two luminaires L1 and L2.

The first luminaire L1 may be configured to determine the distance between the first luminaire L1 and the second luminaire L2 by determining (e.g. computing) the aforementioned overall run-time and using the aforementioned overall run-time for the determination of the distance. The device 1 may be the first luminaire L1. Alternatively, the device 1 may be the second luminaire L2 or a light management device (not shown in FIG. 4) for managing light emission of the lighting system 100.

In FIGs. 2 to 4 the single strength above or below the time scale t are separated from each other in the vertical direction only to make them distinguishable from each other. That is, this vertical shift does not indicate a difference with regard to the signal strength.

The device may be configured to distinguish, based on signal strength and/or run-time, the one or more LOS signals from the one or more PBRC signals having the common source as the one or more LOS signals and having been diffracted in the environment (i.e. the one or more NLOS signals), and from the one or more PBRC signals having the common source as the one or more LOS signals and having been reflected one or more times in the environment (i.e. the one or more MP signals).

In the examples herein, especially in the examples of FIG. 2 to 4, at least one of the first and second luminaire L1, L2, optionally both luminaires, may be configured to transmit and receive PBRC signals. Optionally, in the example of FIG. 2 it is sufficient that the luminaire L1 is configured to transmit PBRC signals and the luminaire L2 is configured to receive PBRC signals. In the example of FIG. 3 it is sufficient that the luminaire L1 is configured to transmit PBRC signals and the luminaire L2 is configured to transmit and receive PBRC signals. In the example of FIG. 4 it is sufficient that the luminaire L1 is configured to transmit and receive PBRC signals and the luminaire L2 is configured to reflect PBRC signals.

Herein, the luminaires may be configured to communicate (optionally wirelessly communicate, e.g. using the PBRC) with each other and optionally a light management device and/or the device 1 of the present invention. For this, they may be part of communication network, such as a mesh network.

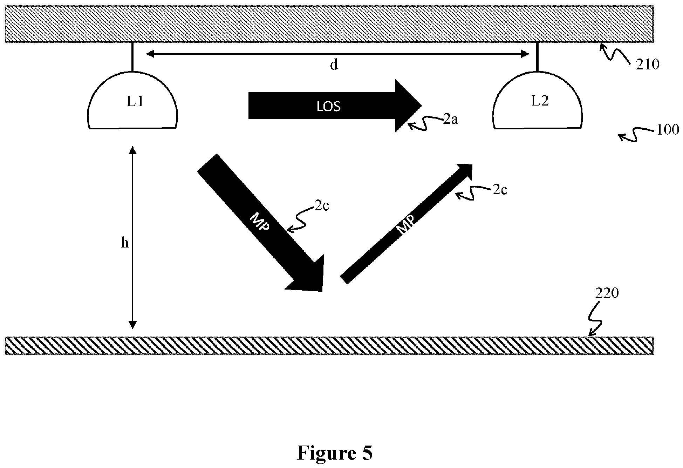

The example of **FIG. 5** corresponds to the example of FIG. 2 and, thus, the description of FIG. 2 is correspondingly valid for the example of FIG. 5.

As shown in FIG. 5, the device 1 may be configured to determine a distance d between the two luminaires L1 and L2 by obtaining the run-time of a LOS signal 2a transmitted by the first luminaire L1 and received by the second luminaire L2. The device 1 may be configured to obtain a run-time of a MP signal 2c transmitted by the first luminaire L1 and received by the second luminaire L2 (i.e. a PBRC signal having been transmitted by the first luminaire L1, reflected at ground 220 and received by the second luminaire L2). The device 1 may be configured to determine, using the determined distance d between the two luminaires L1 and L2 and the obtained run-time of the MP signal 2c, a height h of the two luminaires over ground 220. It may be assumed that the two luminaires L1 and L2 are arranged at the same height h over ground 220.

Optionally, the device 1 may be the luminaire L2 that may perform an active run-time measurement for determining the run-time of the LOS signal 2a and the MP signal 2c and, thus, determine, using the run-time of the LOS signal 2a, the distance d and determine, using the determined distance d and the run-time of the MP signal 2c, the height h. Alternatively, the device 1 may be a light management device.

For the above determination, the device 1 may know the actual ceiling height or ceiling height range and, thus, the height of the luminaires from a lighting management system (e.g. information from a building plan etc.) and/or the luminaire type. For example the luminous flux output of the luminaire may hint the distance between the ceiling and the ground, i.e. the ceiling height. A luminaire with a low luminous flux is typically used at lower ceiling heights as the illumination is suited for a low distance between luminaire and ground. That is a luminaire type with a lower luminous flux output hints on a lower distance between the ceiling and ground, whereas a greater luminous flux output hints on a larger distance between ceiling and ground. For example, high bay luminaire types are for large ceiling heights and, thus, hint on such heights. Wide beam luminaire types are for intermediate or low ceiling heights and, thus, hint on such heights. For example, the height may be categorized in the following ranges: smaller than 3 m, smaller than 5 m, smaller than 10 m or greater than 10 m. The device 1 may determine the distance d, as outlined above and may verify the determination using information on the application (i.e. use case) and, thus, a typical distance between luminaires. The device may be configured to associate the luminaires L1 and L2 to a specific group or room, as typically luminaires of a common group or room are installed at the same height h. Thus, different heights h may indicate different groups and/or different rooms.

The device 1 is configured to control lighting of the lighting system 100 and, thus, of luminaires L1 and L2 based on the determined distance d between the two luminaires L1, L2 and/or the height h of the luminaires L1, L2 above ground 220. For example, the device 1 may determine, using the distance d and/or height h, an amount of light for a homogenous lighting of the ground 220. Optionally, the device 1 may determine, using the distance d and/or height h, a light cone of the luminaires in case a width of light emission of the luminaire is adjustable.

Optionally, the device 1 is configured to determine the distance d between the two luminaires L1, L2 by obtaining the run-time of a LOS signal transmitted by the second luminaire L2 and received by the first luminaire L1, wherein the aforementioned distance may be referred to as "second distance". The device 1 may be configured to obtain a run-time of a MP signal 2c transmitted by the second luminaire L2 and received by the first luminaire (i.e. PBRC signal having been transmitted by the second luminaire L2, reflected at ground 220 and received by the first luminaire L1). The aforementioned run-time of the MP signal 2c may be referred to as "second run-time". The device 1 may be configured to determine, using the determined second distance d between the two luminaires L1, L2 and the obtained second run-time, a height h (may be referred to as second height) of the two luminaires L1, L2 over ground 220. The device 1 may be configured to verify the determined height of the two luminaires L1, L2 over ground 220 by comparing the determined height of the two luminaires L1, L2 over ground 220 (determined using PBRC signals transmitted from the luminaire L1 to the luminaire L2) and the determined second height of the two luminaires L1, L2 over ground 220 (determined using PBRC signals transmitted from the luminaire L2 to the luminaire L1) with each other.

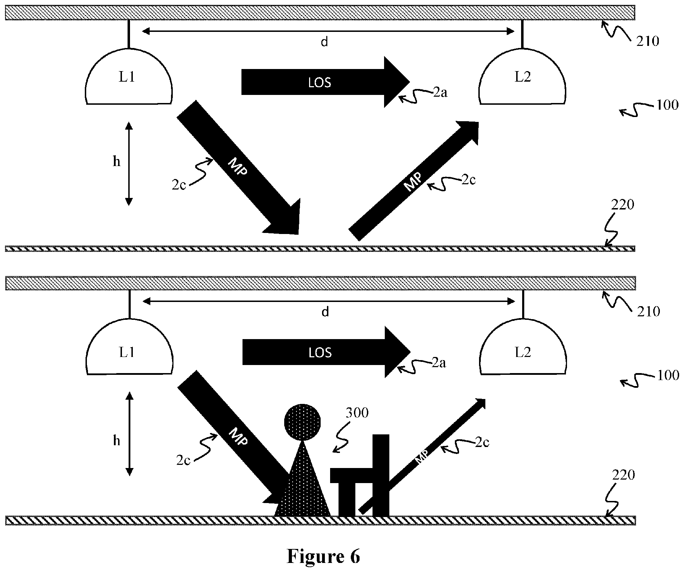

The example of **FIG. 6** corresponds to the example of FIG. 2 and, thus, the description of FIG. 2 is correspondingly valid for the example of FIG. 6.

As shown in FIG. 6, the device 1 is configured to obtain a received signal strength and/or a run-time of a PBRC signal 2a having been transmitted by the first luminaire L1, reflected at ground 220 and received by the second luminaire L2, and determine a reflectivity of the ground 220 using a distance d between the two luminaires L1, L2, a height h over ground 220 of the two luminaires L1, L2 and the obtained received signal strength and/or run-time of the PBRC signal 2c. For example, the device may determine a reflectivity of the ground 220 using the signal strength (e.g. RSSI) of the MP signal 2c received by the second luminaire L2 and knowing the height h of the luminaires L1, L2 and distance d between the luminaires L1, L2. The height h and/or the distance d may be determined as outlined with regard to FIG. 5.

Optionally, the device 1 is the second luminaire L2 or a light management device for the lighting system 100.

Optionally, the device 1 is configured to determine a change of the state of the environment by determining a change over time of the received signal strength and/or run-time of the PBRC signal 2c (i.e. MP signal). For example, a temporary change of the received signal strength and/or run-time of the PBRC signal 2c (i.e. MP signal) may be detected as being caused by a change of the indoor area, such as a person 300 being present, furniture being moved etc. For example, in case a person 300 or an object is present, the MP signal 2c may be reflected and/or diffracted by the person 300 or the object. This may reduce the signal strength and/or increase the run-time of the MP signal 2c received by the luminaire L2. Thus, the device 1 may be configured to determine the presence of a person 300 or object as the change of state of the environment by determining that the signal strength of the MP signal 2c received by the luminaire L2 decreases and/or the run-time of the MP signal 2c increases. Thus, the device 1 may be configured to determine that the person 300 moves away again or the object is moved away again by determining that the signal strength of the MP signal 2c received by the luminaire L2 increases again and/or the run-time of the MP signal 2c decreases again.

Thus, the device 1 may detect a change of the ground 220, e.g. by a person being present or furniture, such as a chair, a table etc., being moved. The device 1 may be configured to control lighting of the lighting system 100 and, thus, of the luminaires L1, L2 in dependence on whether a person 300 is present or not. For example, in case the person 300 is present more light may be emitted (i.e. a greater light intensity may be controlled) compared to a situation in which the person 300 is not present. Optionally, the device 1 detecting an object, such as furniture, at the ground may inform about this. For example, the device 1 may inform about the object blocking an escape route. At the top of FIG. 6 the case is shown, when no person 300 or no object is present, whereas at the bottom of FIG. 6 the case is shown, when a person 300 or object (e.g. chair) is present.

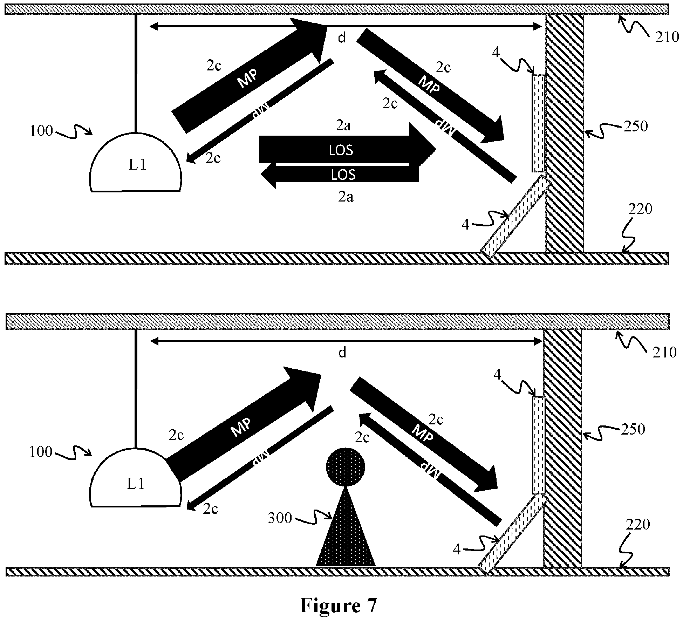

The example of **FIG. 7** corresponds to the example of FIG. 2 with the difference that instead of the second luminaire L2 a reflector 4 is provided and with the assumption that the luminaire L1 and the reflector 4 are installed at the height of a person 300 over ground. The description of FIG. 2 is correspondingly valid for the example of FIG. 7. The description of FIG. 7 is correspondingly valid in case of using the second luminaire L2 instead of the reflector 4 for reflecting signals being transmitted by the luminaire L1.

The device 1 is configured to obtain a signal strength of a LOS signal 2a transmitted by the luminaire L1, reflected at the reflector 4 and received again by the luminaire L1. The device 1 may be configured to obtain a signal strength of a PBRC signal 2c (i.e. MP signal) having been transmitted by the luminaire L1, reflected at an entity (in the example of FIG. 7 being reflected at the ceiling 210) having a height greater than a person 300 over ground 220, reflected at the reflector 4 and received again by the luminaire L1. The device 1 may be configured to determine that the person 300 is present as shown at the bottom of FIG. 7) in case the obtained signal strength of the LOS signal 2a is zero while the obtained signal strength of the MP signal 2c is greater than zero.

Optionally, the device 1 is the luminaire L1 or a light management device for the lighting system 100.

The aforementioned example may also work with active run-time measurement. In this case, instead of the reflector 4, a second luminaire L2 is present, which receives the LOS signal 2a and the MP signal 2c. In case the signal strength of the LOS signal 2a received by the second luminaire L2 is zero while the signal strength of the MP signal 2c is greater than zero, the device 1 may be configured to determine that the person 300 is present. Optionally, the device 1 may be the second luminaire L2.

The device 1 may be configured to control lighting of the lighting system and, thus, of the luminaires L1, L2 in dependence on whether a person 300 is present or not. For example, in case the person 300 is present more light may be emitted (i.e. a greater light intensity may be controlled) compared to a situation in which the person 300 is not present.

In the example of **FIG. 8****,** multiple luminaires (e.g. three luminaires) L1, L2, L3 are installed in a staircase. The description of FIG. 8 is also valid in case of more luminaires. As shown in FIG. 8, the luminaires L1, L2 and L3 are installed in the staircase such that the first luminaire L1 and the luminaire L3 can only wirelessly communicate with each other using PBRC through a stair head 240, whereas the first luminaire L1 and second luminaire L2 as well as the second luminaire L2 and the third luminaire L3, which are positioned on stair heads 240 on opposite ends of stairs 230, may wirelessly communicate with each other using PBRC via a LOS path along the stairs 230. Thus, the first and third luminaire L1, L3 can wirelessly communicate NLOS signals 2b between each other, whereas the first and second luminaire L1, L2 and the second and third luminaire L2, L3 can wirelessly communicate LOS signals 2a between each other. This allows establishing a spatial relationship between the luminaires L1, L2, L3, although the distance between two stair heads 240 above each other and the distance between the two stair heads 240 at opposite ends of stairs 230 are similar. Especially, luminaires being arranged above each other, such as the first and third luminaire L1, L3 may be detected and a geometric relation between the stair heads 240 may be established.

Each luminaire of the luminaires L1, L2, L3 may measure its distance to other luminaires. Each luminaire may receive a LOS signal 2a from at least one other luminaire. In the example of FIG. 8, luminaire L3 receive a LOS signal 2a from the luminaire L2 and a NLOS signal 2b (having a smaller signal strength compared to the LOS signal 2a) from luminaire L1; luminaire L2 receives a LOS signal 2a from the luminaire L1 and a LOS signal 2a from the luminaire L3; and luminaire L1 receives a LOS signal 2a from luminaire L2 and a NLOS signal 2b (having a smaller signal strength compared to the LOS signals 2a) from luminaire L3. Using this information, the device 1 may be configured to classify the luminaires L1 and L3 to a first group and the second luminaire L2 to another group, wherein luminaires of the first group are installed above each other. The distance between the different stair heads 240 arranged above each other may be determined using the received NLOS signals 2b. The determined distance between the different stair heads 240 arranged above each other may be verified using the LOS signals 2a, e.g. by determining a distance between the luminaires L3 and L2 and a distance between the luminaires L1 and L2. The luminaire L3 may be determined as being the luminaire installed at the lowest position as it receives less PBRC signals compared to the other luminaires L1, L2.

For example, the device 1 is configured to, in case multiple luminaires L1, L2, L3 are arranged in a staircase such that each luminaire has a LOS 2a with at least one other luminaire, obtain information on one or more LOS signals 2a received by the multiple luminaires L1, L2, L3 and information on one or more PBRC signals 2b (i.e. NLOS signals) having a common source as the one or more LOS signals 2a, having been diffracted in the environment (diffracted by traveling through the stair heads 240) and received by one or more of the multiple luminaires L1, L2, L3. The device 1 may be configured to determine a location of the multiple luminaires L1, L2, L3 in the staircase using the obtained information on the one or more LOS signals 2a and obtained information on the one or more PBRC signals 2b (i.e. NLOS signals) having been diffracted in the environment. The device 1 may be any one of the luminaires or a light management system for the lighting system 100.

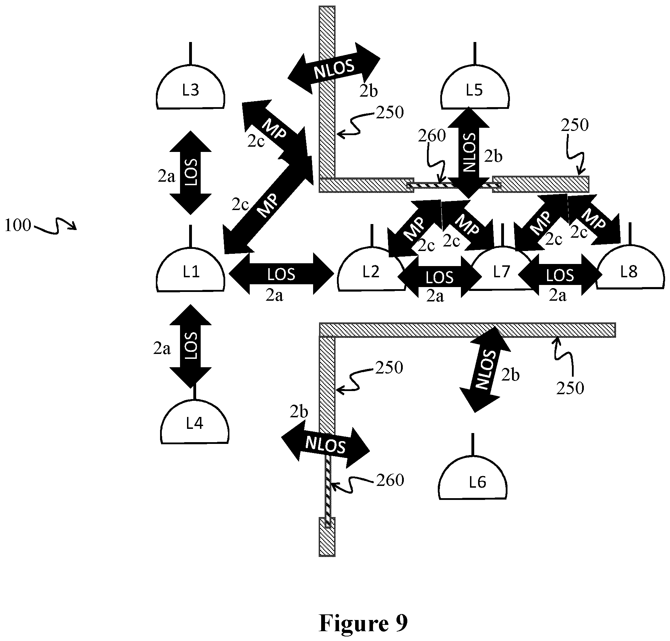

In the example of **FIG. 9****,** multiple luminaires L1, L2, L3, L4, L5, L6, L7 and L8 are installed in an indoor area (e.g. a building), where the luminaires L1, L3 and L4 are installed in a first room, the luminaire L5 is installed in a separate second room, the luminaire L6 is installed in a separate third room and the luminaires L2, L7 and L8 are installed in a corridor leading to the first room an separating the second and third room from each other. FIG. 9 shows a top view of the indoor area. In FIG. 9, walls are labelled by reference sign "250" and doors are labeled by reference sign "260". The following description is correspondingly valid for a different layout of the indoor area, a different number of luminaires and/or a different installation of the luminaires.

Luminaires of the multiple luminaires receiving LOS signals 2a may determine that they are installed in a common sub-area, such as a common room, and thus may form a logical control group in order to be controlled together. For example, the luminaires L3, L1 and L4 may exchange LOS signals 2a and, thus, may be determined to be in the same room (i.e. first room) and be grouped to a logical control group. This may be done by the device 1 of FIG. 1. Since the luminaire L5 of the second room can only exchange NLOS signals 2b with the luminaires L1, L3, L4 of the first room, the device 1 may determine that the luminaire L5 is in a different room compared to the luminaires L1, L3, L4. The same applies for the luminaire L6 of the third room and the luminaires L1, L3, L4 of the first room.

A change in the signal strength of a NLOS signal 2b may indicate the presence of a door 260 in a wall 250, as the signal strength may be greater in case the door 260 is open compared to a point in time when the door 260 is closed.

The device 1 may determine that luminaires, such as the luminaires L2, L7 and L8, being in a narrow sub-area, such as a narrow corridor, receive MP signals 2c with more reflections compared to luminaires being installed in a wide sub-area. This allows the device 1 to detect luminaires being installed in a narrow sub-area, such as a narrow corridor. Accordingly, the device 1 may determine that luminaires, such as the luminaire L1, being installed in a wide sub-area receive MP signals 2c with less reflections. This allows the device 1 to detect luminaires being installed in a wide sub-area, such as a wide room.

The device 1 may control lighting (e.g. light intensity, angle of radiation etc.) of a luminaire depending on whether the luminaire is installed in a wide sub-area or a narrow sub-area of the indoor area.

Optionally, the height of the ceiling (e.g. between 2,5 m and 4,5 m) and dimensions of the indoor area, such as width of corridor(s) (e.g. between 2 m and 4 m), dimensions of room(s) etc., may be known. The dimensions of the indoor area and the positions of the luminaires are assumed to be constant over longer time periods.

The luminaires, such as luminaires L1, L3, L4, L2, L7 and L8, may receive LOS signals 2a. The device 1 may obtain the received LOS signals 2a and determined, using the received LOS signals 2a, the distance between the luminaires. Optionally any luminaire or each luminaire of the luminaires may be the device 1. The device 1 may be a light management device for managing the luminaires of the lighting system 100.

Luminaires belonging to a common sub-area, e.g. room, may be distinguished from luminaires being in a different sub-area, e.g. different room, as between luminaires of different sub-areas (e.g. different rooms) NLOS signals 2b are communicated which have a reduced signal strength compared to LOS signals 2a. Distances determined between luminaires may be verified by typical distances between luminaires (e.g. between 1 m and 6 m).

Thus, the device 1 of FIG. 1 may be configured to, in case multiple luminaires are arranged in an indoor area, as exemplarily shown in FIG. 9, obtain information on LOS signals 2a communicated by the multiple luminaires, determine distances between the multiple luminaires using the information on the LOS signals 2a, determine, based on the determined distances, a pattern of two or more luminaires, such as the luminaires L1, L3, L4, of the multiple luminaires, and assign the two or more luminaires of the determined pattern to a common group or a sub-area (e.g. the first room) of the indoor area.

Luminaires, such as the luminaires L2, L7 and L8, that have distances, which are determined using LOS signals 2a communicated between them and indicate an installation of the luminaires along a line (i.e. linear arrangement or linear group), may be interpreted to be installed in a corridor. For example, in case each luminaire has one or two neighbors with a common distance between them, it may be concluded that the luminaires are arranged in a corridor. For example luminaires L2, L7 and L8 have same distances determined based on the LOS signals 2a transmitted between them. The aforementioned distances are different to a distance between luminaire L1 and L2, which is determined using the LOS signal 2a communicated between the luminaires L1 and L2, different to a distance between luminaire L2 and L3 as well as different to a distance between luminaire L2 and L4.

Once it is determined that luminaires, such as the luminaires L2, L7 and L8, are installed in a common sub-area, such as a corridor, dimensions of the sub-area, such as width and height, may be determined using MP signals 2c communicated by said luminaires. The height of the ceiling of the sub-area may be validated with a distance of a luminaire to the ground, which has been determined using passive run-time measurement. If the height of the ceiling is known (e.g. as environmental information), the width of the corridor can be inferred by identifying ceiling and/or ground reflections in the MP signals, and taking remaining MP signals as an indicator for wall reflections. From these remaining MP signals, the corridor width can be inferred, i.e. determined.

Thus, the device 1 may be configured to assign two or more luminaires of the multiple luminaires to a type of sub-area of different types of sub-areas, such as a room or corridor, of the indoor area depending on the determined distances between the two or more luminaires. Optionally, the device may be configured to obtain information on PBRC signals 2c (i.e. MP signals) having a common source as the LOS signals 2a, having been reflected one or more times in the environment and received by the two or more luminaires and determine one or more dimensions, such as width or height, of the sub-area using information on the assigned type of sub-area and the obtained information on the PBRC signals 2c having been reflected in the environment.

In case a distance determined based on a LOS signal 2a communicated between two luminaires L1 and L3 and a distance determined based on a NLOS signal 2b communicated between two luminaires L3 and L5 are similar or the same, it may be determined that the two luminaires L3 and L5 are in a different room as the distance between them is determined based on a NLOS signal 2b and, thus, on a PBRC signal with reduced signal strength compared to the PBRC signal being a LOS signal 2a, based on which the distance between the luminaires L1 and L3 is determined. Using all the information on distances between the luminaires and the type of PBRC signals, such as LOS signals, NLOS signals and MP signals, communicated between the luminaires allows determining locations of obstacles, which may be interpreted as walls 250 in the context of an indoor area. This allows estimating a layout (ground plane) of an indoor area.

Thus, the device 1 may be, in case multiple luminaires are arranged in an indoor area, configured to obtain information on signal strength of PBRC signals communicated between the multiple luminaires, and determine that two luminaires, such as luminaires L3 and L5, of the multiple luminaires are separated by a wall 250 in case the PBRC signals communicated between the two luminaires have a reduced signal strength compared to a signal strength of PBRC signals communicated between luminaires, such as luminaires L1, L3 and L4, having a distance between them that equals or is within a range of the distance between the two luminaires.

As described above, the change of the signal strength of a NLOS signal 2b communicated between two luminaires, such as the luminaire L4 and L6, located in two different rooms separated by a wall 250 may indicate that a door 260 is present. Once this has been detected, the change of the signal strength may be used as a detection of opening and closing of the door 260 and, thus, as a kind of movement sensor.

Thus, the device 1 may be configured to determine that a door 260 is present in a determined wall 250 between two luminaires, such as the luminaires L4 and L6, in case the reduced signal strength changes over time between two different signal strength values. One signal strength value may be determined when the door 260 is open and the other signal strength value may be determined when the door 260 is closed.

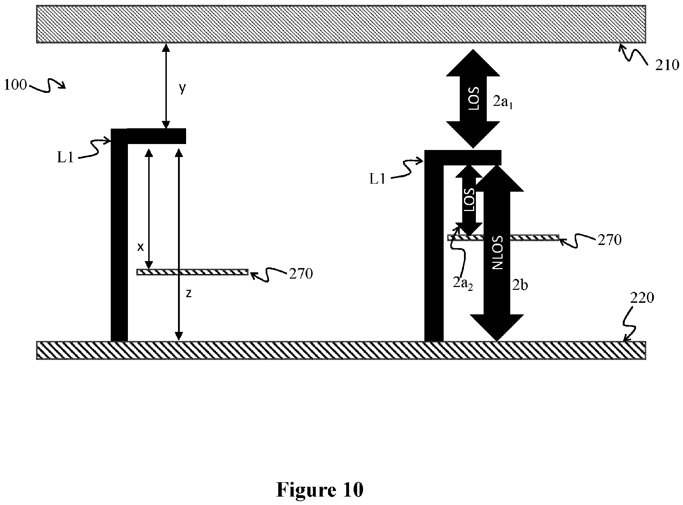

In the example of **FIG. 10**, a luminaire L1 in the form of a floor luminaire (also called standing luminaire) illuminates a working surface 270, e.g. a working table. Using the LOS signal 2a₁ transmitted by the luminaire L1 and reflected at the ceiling 210 back to the luminaire L1, the LOS signal 2a₂ transmitted by the luminaire L1 and reflected at the working surface 270 back to the luminaire L1 and the NLOS signal 2b transmitted by the luminaire L1 through the working surface 270 and reflected at the ground 220 back to the luminaire L1 allows determining a distance y between the luminaire L1 and the ceiling 210, a height x of the luminaire L1 above the working surface 270 and a height z of the luminaire L1 above the ground 220.

It may be assumed that the place of action of the luminaire L1 (i.e. the luminaire L1 being installed over the working surface 270) and typical dimensions of the working surface, the room and the luminaire, such as length of working surface (e.g. between 0,6 m and 1,5 m), height of the luminaire L1 (e.g. between 1,6 m and 2,3 m), height of the ceiling (e.g. between 2,3 m and 4 m), are known.

The height z of the luminaire L1 above ground 220, which may be determined using the NLOS signals 2b, especially the run-time of the NLOS signal 2b, may be verified using a known typical height of the luminaire L1. This may be used as a reference for the signal strength. In case, the luminaire L1 receives another PBRC signal, i.e. LOS signal, from below with a stronger signal strength, then this signal may be interpreted as being reflected from the working surface 270. Thus, the run-time of the aforementioned signal may be used to determine the height x of the luminaire L1 above the working surface 270.

In case two LOS signals 2a are received by the luminaire L1, the LOS signal 2a₁ with the greater or stronger signal strength may be interpreted to be reflected at the ceiling 210 and, thus, used to determine the distance y from the luminaire L1 to the ceiling 210. The LOS signal 2a₂ with the smaller or weaker signal strength may be interpreted to be reflected at the working surface 270. In case one of the two LOS signals, e.g. the run-time of one of the LOS signals, changes it may be interpreted as belonging to the working surface 270, which optionally may be adjusted in its height above ground 220. The device 1 may determine that the working surface 270 is moved vertically away from ground 220 when the run-time of the LOS signal 2a₂ reduces and vice versa. The device 1 may control the lighting of the luminaire L1 accordingly, e.g. reduce the light intensity the closer the working surface 270 is vertically moved to the luminaire L1 and vice versa.

Thus, the device 1 may be configured to, in case a luminaire L1 is arranged over an entity 270, such as a table, in an indoor area, obtain information on a LOS signal 2a transmitted by the luminaire L1, reflected at a ceiling 210 and received by the luminaire L1, information on a second LOS signal 2a transmitted by the luminaire L1, reflected at the entity 270 and received by the luminaire L1, and information on a PBRC signal 2b (NLOS signal) having been transmitted by the luminaire L1, diffracted at the entity 270, reflected at ground 220 and received by the luminaire L1. The device may be configured to determine that the LOS signal 2a having the greater received signal strength of the two LOS signals 2a is reflected at the ceiling 210, and/or the LOS signal 2a having a changing received signal strength of the two LOS signals 2a is reflected at the entity 270.

The device 1 may be the luminaire L1 or a light management device.

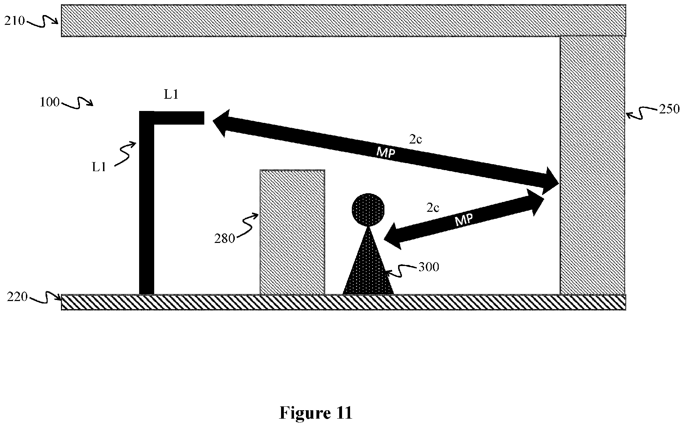

In the example of **FIG. 11**, a luminaire L1 being a ground luminaire is installed in a room, where an obstacle 280 does not allow a LOS to a person 300 being present in the room. The obstacle 280 may be mobile or not. For example, it may be furniture, a column etc. The luminaire L1 may transmit a PBRC signal and in response thereto receive a MP signal 2c that is reflected at the person 300 and the wall 250. In case, the person 300 is present the MP signal 2c is different compared to a case, when the person 300 is not present. That is, the presence of the person 300 may have an impact on the signal strength and/or run-time of the MP signal 2c received by the luminaire L1. The luminaire L1 may detect that the obstacle is present, in case it receives a new PBRC signal that is not a LOS signal but a MP signal 2c. Depending on the detection of the person 300 and/or the obstacle 280, the luminaire L1 may be controlled differently, i.e. its light emission may be adapted.

In the above case it may be assumed that the typical room size is known and the dimensions of the room are constant over longer time periods. PBRC signals, such as LOS signals 2a, NLOS signals 2b and/or MP signals 2c, received by the luminaire L1 may be monitored by the device 1. In case the device 1 detects a new PBRC signal, it may be evaluate whether the new signal is a direct echo (i.e. LOS signal) or an indirect echo (MP signal, NLOS signal). The new signal being a MP signal or NLOS signal may be determined by comparing the new signal with the existing static PBRC signals in the room. The luminaire L1 may be differently controlled in case it is determined that the new signal is not a LOS signal (e.g. control only a glow to indicate readiness or as an emergency light).

Thus, the device 1 may be configured to obtain information on a new PBRC signal communicated by a luminaire L1, determine whether the communicated PBRC signal is a LOS signal 2a or not (i.e. a NLOS signal 2b or MP signal 2c), and control the luminaire L1 differently in case the communicated PBRC signal is not a LOS signal 2a compared to a case, in which the communicated PBRC signal is a LOS signal 2a.

The device 1 may be the luminaire L1 or a light management device.

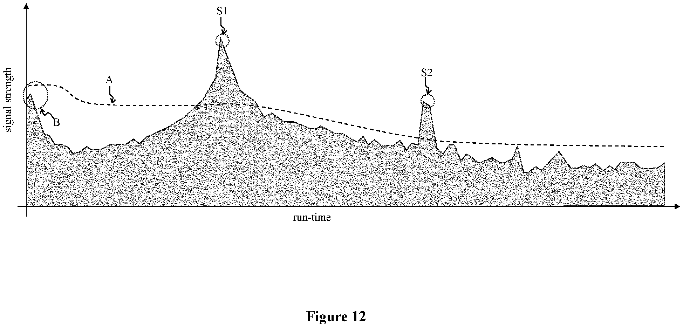

**FIG. 12** shows an example of received multiple PBRC signals that have been transmitted by a common transmitter (i.e. they have a common source) and received by a respective receiver, wherein the received multiple PBRC signals have different run-times. The respective receiver may be the same as the common transmitter, e.g. in case of passive run-time measurement or active run-time measurement, or may be different to the common transmitter, e.g. in case of active run-time measurement. The example of received multiple PBRC signals of FIG. 12 may be valid for any of the above described examples of FIGs. 1 to 11.

The vertical axis of the graph of FIG. 12 represents the signal strength of the PBRC signals and the horizontal axis of the graph of FIG. 12 represents the run-time of the PBRC signals, i.e. the time between transmission of a respective PBRC signal and receival of the respective PBRC signal. In FIG. 12, the line A exemplarily indicates, in a simplified way, received noise, wherein received PBRC waves having an amplitude below said line A are treated as noise and not as a PBRC signal. At the beginning, i.e. when the received PBRC waves have short run-times, waves with higher amplitudes may be regarded as noise and, thus, lie below the line A, as such short run-times may represent PBRC waves that have been reflected near the common transmitter and, thus, are not useful for obtaining information on the environment. This is exemplarily indicated in FIG. 12 by the dashed circle B.

In FIG. 12 two PBRC signals S1 and S2 having a highest and second highest signal strength, accordingly, among the received multiple PBRC signals are indicated within dashed circles. These two PBRC signals S1 and S2 are examples of two or more PBRC signals, of which information may be obtained by a device according to the present invention. For example, the information on these two PBRC signals S1 and S2, e.g. the signal strength and/or the run-time of each of these two PBRC signals S1 and S2, may be used for determining the state and/or a change of the state of the environment of the lighting system.

The received PBRC waves shown in FIG. 12, i.e. noise and multiple PBRC signals having the common source, are only by way of example and depend on the setting of the environment, i.e. how the PBRC waves or PBRC signals travel from the common source through the environment before being received. Moreover, the line A indicating a border between PBRC waves being regarded as noise (having an amplitude below the line A) and PBRC waves being regarded as PBRC signals (having an amplitude/signal strength above the line A) is only by way of example and may be differently. That is, the PBRC signals may be identified by their amplitude/signal strength. Any method known in the art may be used for distinguishing noise from PBRC signals having been received. The noise may be due to noise generated by the receiver and superimposed weak impulses. As indicated in FIG. 12, by situational expected run-times and signal strength certain PBRC signals may be not regard as signals (e.g. in case they have to small run-times, as exemplarily indicated by the dashed circle B).

The description of any FIG. of the FIGs. 1 to 12 may be valid for any one of the other FIGs of FIGs. 1 to 12. Herein, the PBRC may be used for wirelessly communicating of information or data between luminaires and optionally other entities, such as a light management device and/or a device according to the first aspect of the invention. Generally, the LOS paths, MP paths and NLOS paths shown in the FIGs. are only examples for illustrating optional features and details of the present invention. The present invention is not limited by the shown paths and, thus, different paths, especially more paths than shown, may be present.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A device (1) for a lighting system (100), wherein the device (1) is configured to
- obtain information on two or more pulse-based radio communication, PBRC, signals (2a, 2b, 2c) that have a common source and have different run-times, and
- determine a state and/or a change of a state of an environment of the lighting system (100) by using the information on the two or more PBRC signals.

2. The device (1) according to claim 1, wherein the device is configured to obtain as the information on the two or more PBRC signals (2a, 2b, 2c)
- the run-time of one or more, optionally of each, of the two or more PBRC signals (2a, 2b, 2c), and/or
- a signal strength of one or more, optionally of each, of the two or more PBRC signals (2a, 2b, 2c).

3. The device (1) according to claim 1 or 2, wherein
- the device (1) is configured to determine the state and/or change of the state of the environment by using environmental information comprising at least one of
- information on a position of a luminaire (L1) being the common source of the two or more PRBC signals (2a),
- information on a position of a second luminaire (L2) having received the two or more PRBC signals (2a),
- information on a position of a third luminaire (L20) having transmitted the two or more PRBC signals (2a) or two or more further PRBC signals (2a₁) logically associated with the two or more PRBC signals (2a) in response to receiving the two or more PRBC signals (2a), and
- information on a configuration of the environment.

4. The device (1) according to any one of the previous claims, wherein
- the device (1) is configured to determine, based on at least one of the signal strength of the two or more PBRC signals, the run-time of the two or more PBRC signals and the environmental information, whether a PBRC signal of the two or more PBRC signals
- has been travelling on a line of sight path, LOS path between the common source and a respective position in the environment, or
- has been reflected one or more times in the environment when travelling between the common source and the respective position in the environment, or
- has been diffracted by at least one obstacle and/or travelled through one obstacle in the environment when travelling between the common source and the respective position.

5. The device (1) according to any one of the previous claims, wherein the device is
- a light management device configured to wirelessly communicate with one or more luminaires of the lighting system, or
- a luminaire (L1) configured to transmit and receive PBRC signals.

6. The device (1) according to claim 4, wherein the device (1) being the luminaire (L1, L2) is configured to
- transmit and receive the two or more PBRC signals (2a), and/or
- receive the two or more PBRC signals from one or more luminaires.

7. The device (1) according to any one of the previous claims, wherein the device (1) is configured to
- determine a distance (d) between two luminaires (L1, L2) by obtaining the run-time of a LOS PBRC signal (2a) having been transmitted by a first luminaire (L1) of the two luminaires (L1, L2) and received by a second luminaire (L2) of the two luminaires (L1, L2),
- obtain a run-time of a PBRC signal (2c) having been transmitted by the first luminaire (L1), reflected at ground (220) and received by the second luminaire (L2), and
- determine, using the determined distance (d) between the two luminaires (L1, L2) and the obtained run-time, a height (h) of the two luminaires (L1, L2) over ground (220).

8. The device (1) according to claim 7, wherein the device is configured to
- determine a second distance between the two luminaires (L1, L2) by obtaining the run-time of a LOS PBRC signal (2a) having been transmitted by the second luminaire (L2) of the two luminaires (L1, L2) and received by the first luminaire (L1) of the two luminaires (L1, L2),
- obtain a second run-time of a PBRC signal (2c) having been transmitted by the second luminaire (L2), reflected at ground (220) and received by the first luminaire (L1),
- determine, using the determined second distance between the two luminaires (L1, L2) and the obtained second run-time, a second height of the two luminaires (L1, L2) over ground (220), and
- verify the determined height of the two luminaires (L1, L2) over ground (220) by comparing the determined height of the two luminaires (L1, L2) over ground (220) and the determined second height of the two luminaires (L1, L2) over ground (220) with each other.

9. The device (1) according to any one of the previous claims, wherein the device (1) is configured to
- obtain a received signal strength and/or a run-time of a PBRC signal (2c) having been transmitted by a first luminaire (L1) of two luminaires (L1, L2), reflected at ground (220) and received by a second luminaire (L2) of the two luminaires (L1, L2), and
- determine a reflectivity of the ground (220) using a distance (d) between the two luminaires (L1, L2), a height (h) over ground (220) of the two luminaires (L1, L2) and the obtained received signal strength and/or run-time of the PBRC signal (2c).

10. The device (1) according to claim 9, wherein the device is configured to
- determine a change of the state of the environment by determining a change over time of the received signal strength and/or run-time of the PBRC signal (2c).

11. The device (1) according to any one of the previous claims, wherein the device (1) is configured to
- obtain a signal strength of a LOS PBRC signal (2a) having been transmitted by a luminaire (L1), reflected at a reflector (4) and received again by the luminaire (L1), the luminaire (L1) and reflector (4) being installed at the height of a person (300) over ground (220),
- obtain a signal strength of a PBRC signal (2b, 2c) having been transmitted by the luminaire (L1), reflected or diffracted at an entity (210) having a height greater than the person (300) over ground (220), reflected at the reflector (4) and received again by the luminaire (L1),
- determine that the person (300) is present in case the obtained signal strength of the LOS PBRC signal (2a) is zero while the obtained signal strength of the PBRC signal (2b, 2c) having been reflected or diffracted is greater than zero.

12. The device (1) according to any one of the previous claims, wherein the device (1) is configured to, in case multiple luminaires (L1, L2, L3) are arranged in a staircase such that each luminaire has LOS with at least one other luminaire,
- obtain information on one or more LOS PBRC signals (2a) having been received by the multiple luminaires (L1, L2, L3) and information on one or more PBRC signals (2b) having a common source as the one or more LOS PBRC signals (2a), having been diffracted in the environment and received by one or more of the multiple luminaires (L1, L2, L3), and
- determine a location of the multiple luminaires (L1, L2, L3) in the staircase using the obtained information on the one or more LOS PBRC signals (2a) and obtained information on the one or more PBRC signals (2b) having been diffracted in the environment.

13. The device (1) according to any one of the previous claims, wherein the device (1) is configured to, in case multiple luminaires (L1, L2, L3, L4, L5, L6, L7, L8) are arranged in an indoor area,
- obtain information on LOS PBRC signals (2a) communicated by the multiple luminaires (L1, L2, L3, L4, L5, L6, L7, L8),
- determine distances between the multiple luminaires (L1, L2, L3, L4, L5, L6, L7, L8) using the information on the LOS PBRC signals (2a) and/or the environmental information, e.g. information on an installation of the multiple luminaires in the environment,
- determine, based on the determined distances, a pattern of two or more luminaires (L2, L7, L8) of the multiple luminaires (L1, L2, L3, L4, L5, L6, L7, L8), and
- assign the two or more luminaires (L2, L7, L8) of the determined pattern to a common group or a sub-area of the indoor area and/or identify the determined pattern with a pattern of a given choice.

14. The device (1) according to claim 13, wherein the device (1) is configured to
- assign the two or more luminaires (L2, L7, L8) to a type of sub-area of different types of sub-areas, such as a room or corridor, of the indoor area depending on the determined distances between the two or more luminaires (L2, L7, L8), and
- optionally obtain information on PBRC signals (2c) having a common source as the LOS PBRC signals (2a), having been reflected one or more times in the environment and received by the two or more luminaires (L2, L7, L8) and determine one or more dimensions, such as width or height, of the sub-area using information on the assigned type of sub-area and the obtained information on the PBRC signals (2c) having been reflected in the environment.

15. The device (1) according to any one of the previous claims, wherein the device (1) is, in case multiple luminaires (L1, L2, L3, L4, L5, L6, L7, L8) are arranged in an indoor area, configured to
- obtain information on signal strength of PBRC signals communicated between the multiple luminaires (L1, L2, L3, L4, L5, L6, L7, L8), and
- determine that two luminaires (L5, L7) of the multiple luminaires (L1, L2, L3, L4, L5, L6, L7, L8) are separated by a wall (250) in case the PBRC signals (2b) communicated between the two luminaires (L5, L7) have a reduced signal strength compared to a signal strength of PBRC signals (2a) communicated between luminaires (L1, L3) having a distance between them that equals or is within a range of the distance between the two luminaires (L5, L7).

16. The device (1) according to claim 15, wherein the device (1) is configured to determine that
- a door (260) is present in the determined wall (250) between the two luminaires (L5, L7) in case the reduced signal strength changes over time between two different signal strength values.

17. The device (1) according to any one of the previous claims, wherein
- the device (1) is configured to, in case a luminaire (L1) is arranged over an entity (270), such as a table, in an indoor area, obtain information on a LOS PBRC signal (2a₁) transmitted by the luminaire (L1), reflected at a ceiling (210) and received by the luminaire (L1), information on a second LOS PBRC signal (2a₂) transmitted by the luminaire (L1), reflected at the entity (270) and received by the luminaire (L1), and information on a PBRC signal (2b) having been transmitted by the luminaire (L1), diffracted at the entity (270), reflected at ground (220) and received by the luminaire (L1), and
- the device (1) is configured to determine that
- the LOS PBRC signal (2a₁) having the greater received signal strength of the two LOS PBRC signals (2a₁, 2a₂) is reflected at the ceiling (210), and/or
- the LOS PBRC signal (2a₂) having a changing received signal strength of the two LOS PBRC signals (2a₁, 2a₂) is reflected at the entity (270).

18. The device (1) according to any one of the previous claims, wherein the device (1) is configured to
- obtain information on a new PBRC signal communicated by a luminaire(L1),
- determine whether the communicated PBRC signal is a LOS PBRC signal (2a) or not, and
- control the luminaire (L1) differently in case the communicated PBRC signal is not a LOS PBRC signal (2a) compared to a case, in which the communicated PBRC signal is a LOS PBRC signal (2a).

19. The device (1) according to any one of the previous claims, wherein the device (1) is configured to control lighting of the lighting system (100) based on the determine state and/or change of the state of the environment of the lighting system (100).

20. A method for determining a state and/or a change of a state of an environment of a lighting system (100), the method comprising
- obtaining information on two or more pulse-based radio communication, PBRC, signals (2a) that have a common source and have different run-times to each other, and
- determining the state and/or the change of a state of the environment of the lighting system (100) by using the information on the two or more PBRC signals.
